# EUROPÄISCHE PATENTANMELDUNG

(11) **EP 1 850 104 A2**
(43) Veröffentlichungstag der Anmeldung: **31.10.2007**
(21) Anmeldenummer: 07004625.5
(22) Anmeldetag: 07.03.2007
(51) Int. Cl.: G01K 17/08, F24J 2/46

(54) **Verfahren zum Bestimmen der Wärmemenge eines flüssigen Solarmediums in einer Solaranlage**

(30) Priorität: 26.04.2006 DE 102006019281
(71) Anmelder: Kundo System Technik GmbH, 78112 St. Georgen (DE)
(72) Erfinder: Mattes, Rolf, 78112 St. Georgen (DE); Wöhrstein, Hermann, 78052 Villingen-Schwennigen (DE)
(74) Vertreter: Goy, Wolfgang

(57) **Zusammenfassung**

Verfahren zum Bestimmen der Wärmemenge eines flüssigen Solarmediums in einer Solaranlage,
wobei das Solarmedium durch die Solaranlage strömt und dabei durch die Sonneneinstrahlung erwärmt wird,
bei dem die Masse des durch die Solaranlage fließenden Solarmediums gemessen oder bestimmt wird,
bei dem die Temperaturdifferenz des Solarmediums zwischen Einlauf in die Solaranlage und Auslauf aus der Solaranlage gemessen oder bestimmt wird,
bei dem von der Temperatur sowie von der Konzentration des Solarmediums abhängige Werte der spezifischen Wärmekapazität des Solarmediums vorgegeben werden und bei dem aus den vorgenannten Werten zu Masse, Temperaturdifferenz sowie spezifischer Wärmekapazität die Wärmemenge bestimmt wird, wobei
mehrere Konzentrationen des Solarmediums vorgegeben werden, aus denen die zutreffende Konzentration des verwendeten Solarmediums ausgewählt wird, und
daß jeder Konzentration des Solarmediums die von der Temperatur abhängigen spezifischen Wärmekapazitäten zugeordnet werden.

## Beschreibung

Die Erfindung betrifft ein Verfahren zum Bestimmen der Wärmemenge eines flüssigen Solarmediums in einer Solaranlage, wobei das Solarmedium durch die Solaranlage strömt und dabei durch die Sonneneinstrahlung erwärmt wird, nach dem Oberbegriff des Anspruchs 1.

Das spezielle Anwendungsgebiet der Erfindung sind Wärmemengenzähler bzw. ein Verfahren zum Betreiben derartiger Wärmemengenzähler im Zusammenhang mit Solaranlagen. Ziel ist es, die thermische Wärmeenergiemenge bei derartigen Solaranlagen zu bestimmen. Nichtsdestoweniger ist das erfindungsgemäße Verfahren allgemein für Anlagen einsetzbar, die mit Frostschutzmittel befüllt sind.

Als Solarmedium dient in der Regel ein Gemisch aus Wasser und Frostschutzmittel. Andere Solarmedien sind grundsätzlich denkbar, sofern dieses Solarmedium durch unterschiedliche Konzentrationen irgendwelcher Stoffe gekennzeichnet ist.

Zum Bestimmen der gewonnenen Wärmemenge des flüssigen Solarmediums in einer Solaranlage spielen unterschiedliche Faktoren eine Rolle.

Ein erster Faktor ist die Masse des Solarmediums, welche erwärmt worden ist. Diese Masse wird in der Praxis dadurch bestimmt, daß das Durchflußvolumen gemessen und mit der Dichte multipliziert wird. Die Dichte hängt dabei von der Temperatur ab.

Ein zweiter Faktor betrifft die spezifische Wärmekapazität des Solarmediums. Diese hängt ebenfalls von der Temperatur des Solarmediums ab, außerdem von der Konzentration des Solarmediums, d. h. von dem Mengenanteil an enthaltenem Frostschutzmittel.

Ein dritter Faktor betrifft die Temperaturdifferenz des Solarmediums zwischen dem Einlauf dieses Solarmediums in die Solaranlage und dem Auslauf aus der Solaranlage. Denn durch die Sonneneinstrahlung wird das Solarmedium erwärmt.

Die verschiedenen Solarmedien unterscheiden sich durch ihre physikalischen Eigenschaften. Darüber hinaus besitzt ein bestimmtes Solarmedium bei unterschiedlichen Konzentrationen auch unterschiedliche physikalische Eigenschaften. Somit muß für den Wärmemengenzähler bei der Bestimmung der Wärmeenergie die Funktion, d. h. die temperaturmäßige Abhängigkeit der spezifischen Wärmekapazität sowie der Dichte vorliegen (sofern bei letzterem das durchfließende Volumen an Solarmedium gemessen und über die temperaturabhängige Dichte die Masse bestimmt wird).

Bisher wird der Wärmemengenzähler für ein bestimmtes Solarmedium bezüglich einer einzigen Konzentration im Werk programmiert. Dies ist ersichtlich dann nachteilig, wenn der Benutzer für seine Solaranlage ein Solarmedium mit einer anderen Konzentration verwendet.

Davon ausgehend liegt der Erfindung die Aufgabe zugrunde, ein vereinfachtes Verfahren zum Bestimmen der Wärmemenge eines flüssigen Solarmediums in einer Solaranlage bei unterschiedlichen Konzentrationen des Solarmediums zu schaffen.

Die technische Lösung ist gekennzeichnet durch die Merkmale im Kennzeichen des Anspruchs 1.

Dadurch ist eine einfache Anpassung von Wärmemengenzählern bei Solarantagen an unterschiedliche Konzentrationen des Solarmediums möglich. Insbesondere ist mit dem erfindungsgemäßen Verfahren eine Möglichkeit geschaffen, welche es dem Anwender erlaubt, den Wärmemengenzähler an verschiedene Konzentrationen des Solarmediums anzupassen. Die Grundidee besteht darin, daß jeder vorgegebenen Konzentration des Solarmediums eine im Wärmemengenzähler abgespeicherte Funktion der spezifischen Wärmekapazität in Abhängigkeit von der Temperatur zugeordnet wird. Dies kann beispielsweise über eine Mehrzahl von diskreten Funktionspunkten erfolgen. Somit kann am Wärmemengenzähler die aktuelle Konzentration des Solarmediums angezeigt und entsprechend geändert werden. Wird somit ein Wärmemengenzähler für ein bestimmtes Solarmedium im Werk programmiert, dann werden nur die Nummern der Funktionen (d. h. Temperatur und zugehöriger spezifischer Wärmekapazitätswert) abgelegt, die für dieses Solarmedium zutreffen. Dies wird für alle einstellbaren Konzentrationen getan. Der Anwender kann dann später am Gerät die gewünschte Konzentration innerhalb der festgelegten Grenzen selbst einstellen. Dadurch ergibt sich eine hohe Vereinfachung des Meßverfahrens, da ein und dasselbe Gerät für unterschiedliche Konzentrationen eines bestimmten Solarmediums verwendet werden kann.

Eine vorteilhafte Weiterbildung schlägt gemäß Anspruch 2 vor, daß Konzentrationsbereiche des Solarmediums vorgegeben werden. So kann beispielsweise die aktuelle Konzentration des Solarmediums am Wärmemengenzähler angezeigt und im Konzentrationsbereich von 25% bis 70% in 5%-Schritten verändert werden.

Wie eingangs bereits erwähnt, geht in die Wärmemengenbestimmung die Masse des durch die Solaranlage fließenden Solarmediums ein. Da die Masse nur schwerlich gemessen werden kann, wird sie aus dem durchfließenden Volumen bestimmt. In diese Berechnung geht dann die Dichte des Solarmediums ein, welche allerdings von der Temperatur abhängt. Insofern sind gemäß dieser Weiterbildung in Anspruch 3 entsprechend den vorgegebenen Werten der spezifischen Wärmekapazität entsprechende Funktionen der Dichte in Abhängigkeit von der Temperatur abgespeichert. Dabei wird jeder Konzentration des Solarmediums auch die von der Temperatur abhängige Dichte zugeordnet.

Schließlich schlägt die Weiterbildung gemäß Anspruch 4 vor, daß in dem System Werte für unterschiedliche Sorten von Solarmedien gespeichert sind. Bisher war der Wärmemengenzähler nur für ein ganz bestimmtes Solarmedium, allerdings in unterschiedlichen Konzentrationen ausgerichtet. Die Weiterbildung schlägt nunmehr vor, daß unterschiedliche Sorten von Solarmedien mit unterschiedlichen Konzentrationen und davon abhängig mit unterschiedlichen spezifischen Wärmekapazitäten sowie gegebenenfalls unterschiedlichen spezifischen Dichten im System abgespeichert sind.

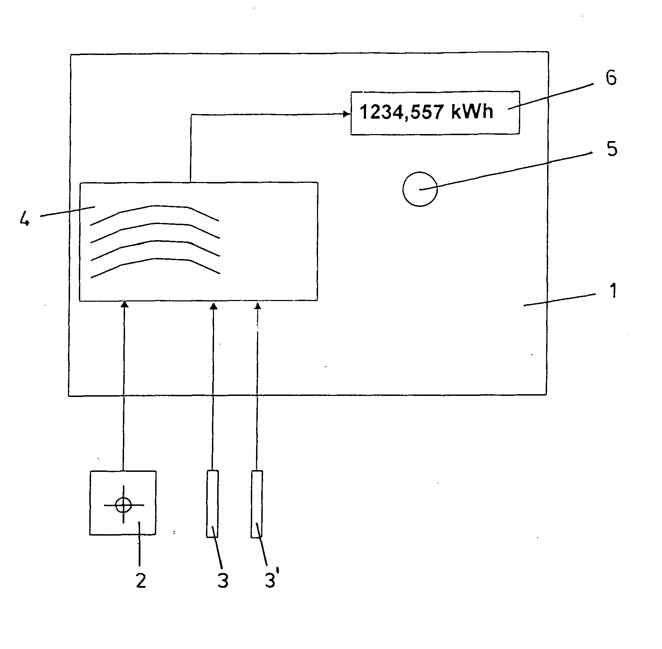

Ein Ausführungsbeispiel einer Vorrichtung zur Durchführung des erfindungsgemäßen Verfahrens zum Bestimmen der Wärmemenge eines flüssigen Solarmediums in einer Solaranlage wird nachfolgend anhand der Zeichnung beschrieben. Diese Zeichnung zeigt in schematischer Weise einen Wärmemengenzähler.

Das System weist einen Wärmemengenzähler 1 auf. An diesen ist eine Volumenmeßeinrichtung in Form eines Durchflußmessers angeschlossen. Weiterhin sind zwei Temperaturmeßeinrichtungen 3, 3' für den Einlauf sowie für den Auslauf des Solarmediums bezüglich zur Solaranlage angeschlossen.

Die vorgenannten Meßeinrichtungen geben ihre Daten an einen Prozeßrechner des Wärmemengenzählers 1. Dabei ist ein Selektor 4 mit einer Anzeige für unterschiedliche Konzentrationen des Solarmediums vorgesehen. Diese unterschiedlichen Konzentrationen des Selektors 4 können mit einer Bedientaste 5 ausgewählt werden.

Den unterschiedlichen Konzentrationen des Solarmediums sind jeweils unterschiedliche Funktionen der spezifischen Wärmekapazität in Abhängigkeit von der Temperatur sowie weiterhin verschiedene Funktionen der Dichte des Solarmediums ebenfalls in Abhängigkeit von der Temperatur zugeordnet.

Aus dem gemessenen Volumen und der temperaturabhängigen Dichte kann die Masse des erwärmten Solarmediums im Prozessor errechnet werden. Diese wird rechnerisch mit der von der Konzentration sowie von der Temperatur abhängigen spezifischen Wärmekapazität in Verbindung gebracht. Außerdem fließt die gemessene Temperaturdifferenz ein. Aus all diesen Werten kann dann die Wärmeenergiemenge errechnet und auf der Anzeige 6 angezeigt werden. Gleichermaßen ist auch eine Anzeige der momentanen Leistung möglich.

### Bezugszeichenliste

- 1: Wärmemengenzähler
- 2: Volumenmeßeinrichtung
- 3, 3': Temperaturmeßeinrichtungen
- 4: Selektor
- 5: Bedientaste
- 6: Anzeige

## Patentansprüche

1. Verfahren zum Bestimmen der Wärmemenge eines flüssigen Solarmediums in einer Solaranlage,
wobei das Solarmedium durch die Solaranlage strömt und dabei durch die Sonneneinstrahlung erwärmt wird,
bei dem die Masse des durch die Solaranlage fließenden Solarmediums gemessen oder bestimmt wird,
bei dem die Temperaturdifferenz des Solarmediums zwischen Einlauf in die Solaranlage und Auslauf aus der Solaranlage gemessen oder bestimmt wird,
bei dem von der Temperatur sowie von der Konzentration des Solarmediums abhängige Werte der spezifischen Wärmekapazität des Solarmediums vorgegeben werden und
bei dem aus den vorgenannten Werten zu Masse, Temperaturdifferenz sowie spezifischer Wärmekapazität die Wärmemenge bestimmt wird,
**dadurch gekennzeichnet,**
**daß** mehrere Konzentrationen des Solarmediums vorgegeben werden, aus denen die zutreffende Konzentration des verwendeten Solarmediums ausgewählt wird, und
**daß** jeder Konzentration des Solarmediums die von der Temperatur abhängigen spezifischen Wärmekapazitäten zugeordnet werden.

2. Verfahren nach dem vorhergehenden Anspruch,
**dadurch gekennzeichnet,**
**daß** Konzentrationsbereiche des Solarmediums vorgegeben werden.

3. Verfahren nach einem der vorgehenden Ansprüche,
**dadurch gekennzeichnet,**
**daß** die Masse des durch die Solaranlage fließenden Solarmediums aus dem durchfließenden Volumen sowie aus der von der Temperatur abhängigen Dichte des Solarmediums bestimmt wird,
wobei jeder vorgegebenen Konzentration des Solarmediums die von der Temperatur abhängige Dichte zugeordnet wird.

4. Verfahren nach einem der vorgehenden Ansprüche,
**dadurch gekennzeichnet,**
**daß** in dem System Werte für unterschiedliche Sorten von Solarmedien gespeichert werden.
